Europäisches Patentamt

European Patent Office

Office européen des brevets

(11) Veröffentlichungsnummer: **0 308 763**
**A2**

# (12) EUROPÄISCHE PATENTANMELDUNG

(21) Anmeldenummer: 88114894.4

(22) Anmeldetag: 12.09.88

(51) Int. Cl.4: **G01J 1/42 , H01S 3/00**

(30) Priorität: 24.09.87 DE 3732248

(43) Veröffentlichungstag der Anmeldung:
29.03.89 Patentblatt 89/13

(84) Benannte Vertragsstaaten:
AT BE CH DE FR GB IT LI LU NL SE

(71) Anmelder: **Siemens Aktiengesellschaft Berlin
und München**
**Wittelsbacherplatz 2**
**D-8000 München 2(DE)**

(72) Erfinder: **Fiedler, Werner**
**Am Pfalzbach 26**
**D-8530 Neustadt/Aisch(DE)**
Erfinder: **Rieser, Peter**
**Hintere Marktstrasse 52**
**D-8500 Nürnberg(DE)**

(54) **Verfahren und Vorrichtung zur Messung der Strahlungsleistung eines insbesondere zu Beschriftungen verwendeten Laserstrahlenbündels.**

(57) Zur Messung der Strahlungsleistung eines Laserstrahlenbündels (L) wird das vom Laser hervorgerufene Streulicht (SL) bevorzugt über mindestens eine Fotodiode (H4) insbesondere im Laserresonator selbst erfaßt, und einer Auswerteschaltung (AWE) zugeführt. Dabei ist es bei einem zur Beschriftung von Teilen verwendeten Laser besonders vorteilhaft, wenn das im Inneren einer Komponente (K) zur schnellen Abschattung bzw. Freigabe des Laserstrahles (L) für die Dauer eines Beschriftungsvorganges auftretende Streulicht ausgewertet wird. Eine spezielle Auswerteschaltung ermöglicht die sichere Erfassung und Anzeige eines auf diese Weise gebildeten Meßwertes auch bei sehr kurzzeitigen Beschriftungsvorgängen.

FIG 1

EP 0 308 763 A2

## Verfahren und Vorrichtung zur Messung der Strahlungsleistung eines insbesondere zu Beschriftungen verwendeten Laserstrahlenbündels

Die Erfindung betrifft ein Verfahren zur Messung der Strahlungsleistung eines Laserstrahlenbündels im Dauerbetrieb. Ferner ist eine Vorrichtung zur Durchführung des erfindungsgemäßen Verfahrens angegeben.

Es ist häufig erwünscht, ohne Verwendung von Handmeßgeräten die aktuelle Strahlungsleistung eines Laserstrahlenbündels ständig automatisch erfassen zu können. Dies trifft in besonderem Maße auf ein Laserstrahl zu, der z.B. zur Beschriftung von Teilen und Werkstücken dient, die aus unterschiedlichsten Materialien hergestellt sein können, z.B. aus Metallen, Kunststoffen, Kartonagen oder ähnlichem. In einem solchen Fall muß die Leistung des Laserstrahlbündels besonders genau einstellbar sein, um sowohl ein Schriftbild mit ausreichendem Kontrast auf dem jeweiligen Teil einprägen zu können und gleichzeitig eine Beschädigung bzw. Zerstörung aufgrund einer versehentlich zu hohen Laserleistung zu vermeiden.

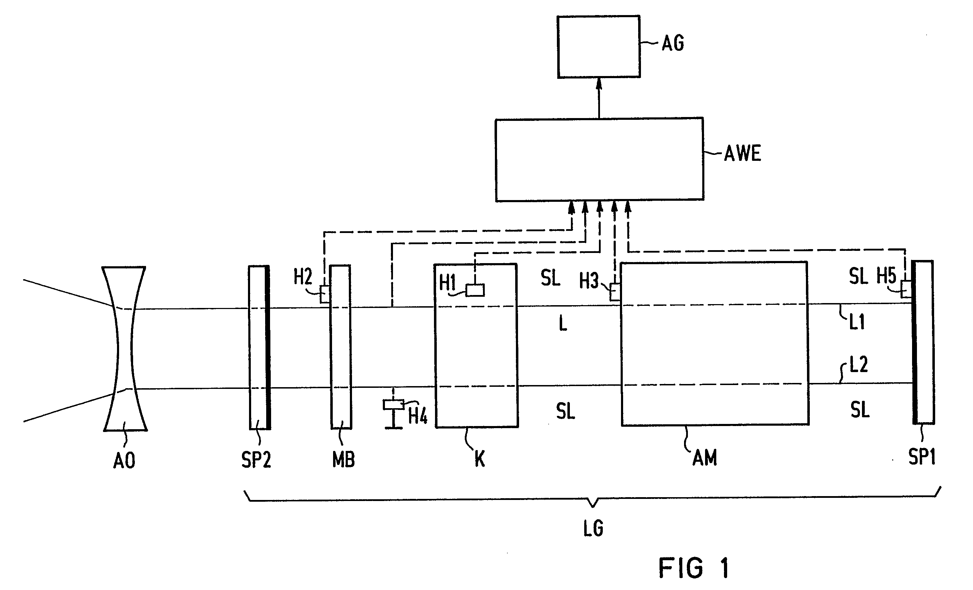

Bei den bekannten Verfahren zur Leistungsmeßung wird das Laserstrahlenbündel in der Regel außerhalb des sogenannten Resonators ausgewertet. Wie in der FIG 1 dargestellt, besteht der eigentliche Lasergenerator LG bekanntlich aus zwei auf einer optischen Schiene gegenüberliegend angebrachten Spiegeln SP1, SP2 und einem dazwischen liegenden, als "aktives Medium" AM dienenden Kristall. Aufgrund von Resonanzerscheinungen bildet sich in diesem Resonator zwischen den Spiegeln ein Laserstrahlenbündel L aus. In der Regel ist eine der beiden Resonatorspiegel hochreflektierend und wird somit als "100 %-Spiegel" bezeichnet, während der andere Resonatorspiegel teilweise durchlässig ist, z.B. mit 10 % Transmission gegenüber 90 % Reflexion. Im Aus führungsbeispiel der FIG 1 ist der hochreflektierende Spiegel mit SP1 und der teilweise durchlässige Spiegel mit SP2 bezeichnet. Mit Hilfe dieses nicht vollständig reflektierenden Spiegels SP2 kann ein Lasernutzstrahl aus dem Resonator "ausgekoppelt" und über weitere optische Einrichtungen, z.B. eine Aufweiteoptik AO und/oder eine zusätzliche Fokussieroptik entsprechend dem gewünschten Verwendungszweck weiterverarbeitet werden. Gemäß der Darstellung von FIG 1 tritt der Nutzstrahl auf der linken Seite des Spiegels SP2 aus dem Laserresonator LG aus. Bei einer bekannten Methode zur Leistungsmessung wird dieser Nutzstrahl direkt ausgewertet, indem ein Teil z.B. durch zusätzliche, in den Strahlengang eingebrachte Komponenten ausgekoppelt wird. Solche Komponenten sind bevorzugt kleine, teilweise reflektierende Spiegel bzw.

Glasscheiben, welche im Nutzstrahl angeordnet sind und einen Teil des Strahles z.B. auf eine Fotozelle umlenken. Es ist ein besonderer Nachteil dieser bekannten Methoden zur direkten Auswertung des Lasernutzstrahles, daß jede zusätzlich in den Strahlengang eingebrachte Komponente aufgrund der Lichtbrechung eine Strahlversetzung bewirkt. Insbesondere bei Lasern, die zu Beschriftungszwecken verwendet werden, wird hierdurch die Positioniergenauigkeit und Strahlungsleistung des Strahlenbündels herabgesetzt.

Diese Beeinträchtigungen können vermieden werden, wenn z.B. auf die Nutzung des Laserstrahles kurzzeitig verzichtet und die Laserleistung in einem separaten "Meßzyklus" bestimmt wird. Diese Meßmethode hat aber den Nachteil, daß zwischen Leistungsmessung und Leistungsnachstellung größere Totzeiten auftreten können. Bei Lasern, die zur Beschriftung von Teilen verwendet werden, kann hiermit nicht die während eines Beschriftungsvorganges aktuell auftretende Leistung erfaßt und gegebenenfalls sofort nachjustiert werden. Es können somit einzelne Beschriftungszyklen mit zu großer bzw. zu kleiner Laserleistung auftreten, was in beiden Fällen unter Umständen zu einer Unbrauchbarkeit des Werkstückes führt, da eine bereits einmal vorgenommene Beschriftung zur Kontrastverbesserung in der Regel nicht noch einmal "nachgezogen" werden kann.

Bei einer weiteren bekannten Meßmethode wird das trotz der hohen Reflexionsfähigkeit des "100 %-Spiegels" dennoch durch diesen hindurchtretende Laserlicht ausgewertet. Hierzu ist allerdings "hinter" diesem Spiegel, in der FIG 1 also rechts vom Spiegel SP1 außerhalb des Resonators, ein zusätzlicher Aufbau auf der optischen Schiene notwendig. So muß insbesondere ein zusätzlicher Diffusor angebracht werden, da aufgrund der Inhomogenität der Energieverteilung im Laserstrahlenquerschnitt das Energiemaximum örtlich eng begrenzt ist. Zudem ist es trotz der Verwendung des Diffusors schwierig, eine Fotozelle auf dieses Energiemaximum zu justieren, da es bei einer Leistungsänderung seine relative Lage innerhalb des Strahlenquerschnittes verschiebt. Obwohl bei dieser Meßmethode der Nutzstrahl optisch in keiner Weise beeinflußt wird, hat sie dennoch den weiteren Nachteil, daß der Raum hinter dem "100 %-Spiegel" nun nicht mehr insbesondere zur Aufnahme von anderen Elementen zur Verfügung steht. So kann z.B. kein zusätzlicher Ziellaser als sichtbarer Pilotstrahl zur Erleichterung der Positionierung durch den 100 %-Spiegel von hinten eingeblendet werden.

Der Erfindung liegt somit die Aufgabe zugrunde, ein Verfahren zur Messung der Strahlungsleistung eines Laserstrahlenbündels anzugeben, bei dem der Strahlengang des Lasernutzstrahles in keiner Weise beeinträchtigt wird und möglichst keine Veränderungen am vorgegebenen Aufbau eines Lasers notwendig sind. Insbesondere soll durch die erfindungsgemäße Leistungsmessung aus Platzgründen nicht auf zusätzliche, gewünschte Anbauten am Laser verzichtet werden müssen. Desweiteren soll eine Vorrichtung zur Durchführung des erfindungsgemäßen Verfahren angegeben werden, die insbesondere für einen Laser geeignet ist, der zur Beschriftung von Teilen verwendet wird.

Die Aufgabe wird gelöst durch die kennzeichnenden Merkmale des Anspruches 1. Eine vorteilhafte Vorrichtung zur Durchführung des Verfahrens ist im Anspruch 3 angegeben. Die Unteransprüche enthalten weitere vorteilhafte Ausführungsformen des erfindungsgemäßen Verfahrens bzw. der Vorrichtung.

Das erfindungsgemäße Verfahren hat den besonderen Vorteil, daß aufgrund der linearen Proportionalität zwischen der Strahlungsleistung eines Laserstrahlenbündels und dem davon hervorgerufenen Streulicht die Leistungsmessung prinzipiell an jeder beliebigen, insbesondere gut zugänglichen Stelle außerhalb des eigentlichen Strahlenganges vorgenommen werden kann. Besonders vorteilhaft wird das im Resonator selbst auftretende Streulicht ausgewertet, da dieses gegenüber dem Streulicht des Lasernutzstrahles außerhalb des Resonators eine wesentlich größere Strahlungsintensität hat. Im Resonator sind wiederum die Stellen zur Leistungsmessung besonders geeignet, an denen besonders viel Streulicht auftritt, z.B. an den Spiegeln bzw. an den Öffnungen von Komponenten, die im Laserstrahlengang auf der optischen Schiene angebracht sind. Das erfindungsgemäße Verfahren eignet sich besonders für einen im Dauerstrichbetrieb, d.h. dem sogenannten "continuous wave mode" betriebenen Laser, bei dem der Strahl nicht mit hoher Frequenz gepulst wird.

Anhand der nachfolgend kurz angeführten Figuren wird die Erfindung desweiteren näher erläutert. Dabei zeigt:

FIG 1 die Prinzipdarstellung eines Lasergenerators zur Erläuterung des erfindungsgemäßen Verfahrens, welche zudem eine Vorrichtung zur Durchführung des Verfahrens enthält,

FIG 2 eine vorteilhafte Ausführungsform einer erfindungsgemäßen Auswerteschaltung für das erfaßte Laserstreulicht,

FIG 3 eine Detaildarstellung einer Komponente, welche bevorzugt bei einem zu Beschriftungen verwendeten Laser eingesetzt wird,

FIG 4 eine weitere vorteilhafte Ausgestaltung der erfindungsgemäßen Auswerteschaltung, welche bevorzugt für einen Laser geeignet ist, der zur Beschriftung von Teilen verwendet wird, und

FIG 5 eine Zusammenstellung der wichtigsten Signale in der Auswerteschaltung der FIG 4.

Gemäß der Darstellung von FIG 1 besteht ein Lasergenerator LG prinzipiell aus den beiden Resonatorspiegeln SP1, SP2 und dem die Lichtresonanz ermöglichenden aktiven Medium AM. In diesem Resonator können abhängig vom jeweiligen Verwendungszweck des Lasers weitere Komponenten angeordnet sein. FIG 1 zeigt hierfür beispielhaft die weiteren Komponenten MB und K, wobei MB eine sogenannte "Modenblende" zur Beeinflussung insbesondere der transversalen Modenverteilung des Laserstrahlenbündels ist. Die Komponente K ist speziell bei einem Laser vorhanden, welcher zur Beschriftung von Teilen verwendet wird. Sie dient zur schnellen Abschattung bzw. Freigabe des Laserstrahlenbündels zwischen zwei Beschriftungsvorgängen, indem bei Erreichen des gewünschten Endpunktes eines auf dem zu beschriftenden Teil einzuprägenden Linienzuges der Laserstrahl ohne unerwünschten Markierungen zu hinterlassen auf den Anfangspunkt eines weiteren einzuprägenden Linienzuges neu positioniert werden kann. Entsprechend dem erfindungsgemäßen Verfahren kann nun prinzipiell an jeder beliebigen Stelle, insbesondere im Resonator selbst, das auftretende Streulicht SL zum Zwecke der Leistungsmessung des Laserstrahlenbündels L bevorzugt über mindestens eine Fotodiode ausgewertet werden. So kann gemäß der Darstellung von FIG 1 z.B eine Fotodiode H4 an einer beliebigen Stelle zwischen irgendwelchen Komponenten auf der optischen Schiene außerhalb des eigentlichen Strahlenbündels L und in einem ausreichenden Abstand von dessen Randbereichen L1, L2 angebracht werden. Zur Erhöhung der Empfindlichkeit ist es in diesem Fall von Vorteil, wenn die Fotodiode mit ihrer lichtempfindlichen Schicht direkt auf das Strahlenbündel ausgerichtet ist.

In weiterer Ausgestaltung der Erfindung kann die Fotodiode bevorzugt da angebracht werden, wo ein besonders hoher Anfall an Laserstreulicht zu erwarten ist. Dies ist insbesondere an den Öffnungen von Komponenten der Fall, die bevorzugt im Resonator angeordnet sind und vom Laserstrahl durchsetzt werden. So ist in der FIG 1 beispielshaft je eine Fotozelle H2 bzw. H3 auf der Außenseite der Modenblende MB bzw. des Gehäuses für das aktive Medium AM angebracht. Es ist auch denkbar, z.B. eine Foto zelle H5 auf den äußeren, nicht direkt vom Laserstrahlenbündel bestrahlten Rand eines der beiden Resonatorspiegel SP1, SP2 aufzusetzen. In einem solchen Fall ist es aufgrund der größeren Intensität des Laserstreulichtes nicht unbedingt erforderlich, die Fotodiode mit ihrer lichtempfindlichen Schicht direkt auf das Laserstrahlenbündel auszurichten, wodurch die Montage der Fotodiode wesentlich vereinfacht wird. Schließlich kann auch vorteilhaft das im Inneren von Komponenten auftretende Laserstreulicht ausgewertet werden. Zu diesem Zweck ist in der FIG 1 die Fotodiode H1 beispielhaft in einer Komponente K angeordnet, welche bei einem Laser, der zur Beschriftung von Teilen verwendet wird, den Laserstrahl zur schnellen Positionierung auf einen neuen Schreibpunkt kurzzeitig abschattet und dannach wieder freigibt. In einer weiteren Ausgestaltung der Erfindung wird das von einer oder mehreren Fotodioden erfaßte und in Fotodiodenspannungen umgesetzte Laserstreulicht bevorzugt zur Glättung und Verstärkung einer Auswerteschaltung AWE zugeführt, welche wiederum ein Anzeigegerät AG ansteuert.

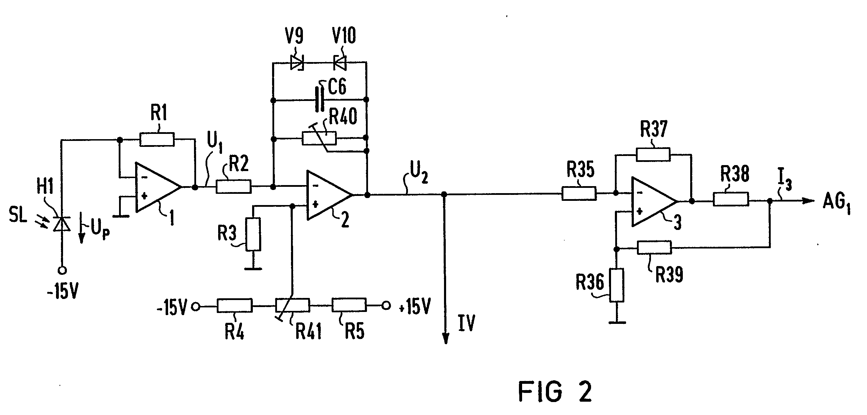

In der FIG 2 ist eine vorteilhafte Ausführungsform einer Auswerteschaltung AWE dargestellt. Diese besteht im wesentlichen aus einem Vorverstärker 1 und einem nachgeschalteten Hauptverstärker 2. Dabei wird die vom Laserstreulicht SL in einer Fotodiode H1 hervorgerufene Fotodiodenspannung $U_P$ dem invertierenden Eingang des über den Widerstand R1 rückgekoppelten Vorverstärkers 1 direkt zugeführt. In der Regel wird das Ausgangssignal $U_1$ des Vorverstärkers noch recht stark mit Rauschsignalen überlagert sein. Mit Hilfe des nachgeschalteten Hauptverstärkers 2 kann dieses Signal $U_1$, welches dem invertierenden Eingang über einen Widerstand R2 zugeführt wird, insbesondere aufgrund des hohen Verstärkungsfaktors und mit einem zusätzlichen Rückkopplungskondensator C6 geglättet werden. Es ist besonders vorteilhaft, wenn der Hauptverstärker zusätzlich über Mittel zur Nullpunkts-, Verstärkungskorrektur und Ausgangssignalbegrenzung verfügt. Im Ausführungsbeispiel der FIG 1 wird die Nullpunktskorrektur durch die dem nichtinvertierenden Eingang des Verstärkers vorgeschalteten Widerstände R3, R4, R5 und dem Potentiometer R41 erreicht. Die Justierung der Verstärkung wird über ein in der Rückführung befindliches Potentiometer R40 ermöglicht. Schließlich dienen zwei gegeneinander geschaltete und ebenfalls in der Rückführung des Verstärkers befindliche Zener-Dioden V9, V10 zur Begrenzung des Pegels des Ausgangssignales $U_2$. Dieses Spannungssignal $U_2$ ist bereits soweit geformt, daß es zur Darstellung auf einem Anzeigeinstrument geeignet ist, z.B. einem Drehspulmeßinstrument. Falls es auf einem entfernt angeordneten Instrument zur Anzeige gebracht werden soll, so muß es vorher in ein entsprechendes, bevorzugt im Bereich zwischen 0 und 20 mA liegendes Stromsignal umgewandelt werden. Hierzu dient der in der FIG 2 zusätzlich dargestellte Spannungs-Stromwandler, der aus einem mit den Widerständen R35, R36, R37, R38 und R39 in bekannter Weise beschalteten Verstärker 3 besteht. Dieser Wandler setzt das Eingangsspannungssignal $U_2$ in ein Stromsignal $I_3$ um, welches insbesondere auf einem Drehspulenmeßinstrument $AG_1$ zur Anzeige gebracht werden kann.

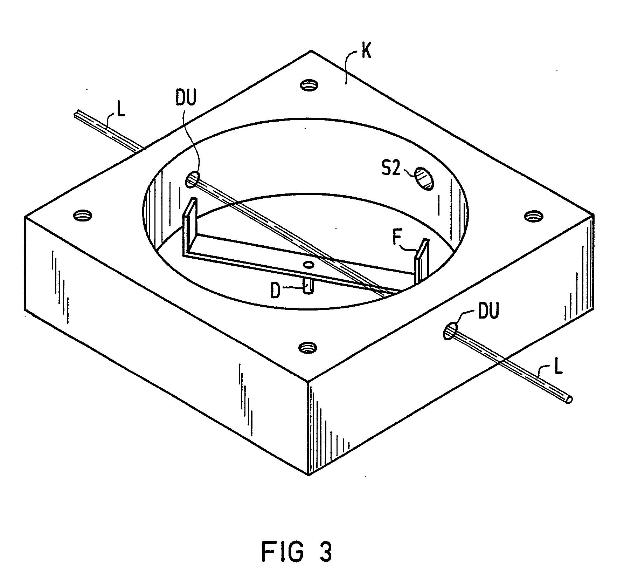

FIG 3 zeigt eine Komponente K, welche bei einem Laser, der zur Beschriftung verwendet wird, zur kurzzeitigen Abschattung des Laserstrahles während einer Neupositionierung zwischen zwei Beschriftungsvorgängen dient. Eine solche Komponente verfügt im Inneren über einen bevorzugt zylindrischen Hohlraum und wird über Öffnungen DU vom Laserstrahl L durchsetzt. Die FIG 3 zeigt diese Komponente im geöffneten Zustand. Im Inneren ist eine vorzugsweise metallische Fahne F um eine konzentrische Achse D drehbar gelagert, welche auch "rotation shutter" genannt wird. Diese Fahne besteht bevorzugt aus einem Blechstreifen mit nach oben gebogenen Enden, welche z.B. zur Abschattung recht schnell in das Laserstrahlenbündel hineingeschwenkt werden können und somit die Öffnungen DU abdecken. Da nun der Laserstrahl unterbrochen ist, kann die Beschriftungsvorrichtung ohne einen Beschriftungsvorgang auszulösen neu positioniert werden. Danach wird der Laserstrahl durch Herausschwenken der Fahne wieder freigegeben. Das im Inneren einer solchen abgeschlossenen Vorrichtung auftretende Laserstreulicht eignet sich besonders vorteilhaft zur Auswertung für die Strahlungsleistungsmessung. Zu dem tritt Streulicht immer nur während eines Beschriftungsvorganges auf, so daß hiermit die tatsächlich auf ein Werkstück aufgebrachte Strahlungsleistung erfaßbar ist. Hierzu wird der Hohlraum im Inneren der Komponente K bevorzugt über eine zusätzliche Bohrung S2 von außen zugänglich gemacht und das Streulicht über mindestens eine in die Bohrung eingelegte Fotodiode erfaßt. Bevorzugt ist die gesamte Anordnung so symmetrisch aufgebaut, daß der Laserstrahl den zylindrischen Hohlraum auf einer Diagonalen durch den Drehpunkt der Fahne durchquert und die Fotodiode ebenfalls auf diesen Drehpunkt ausgerichtet ist.

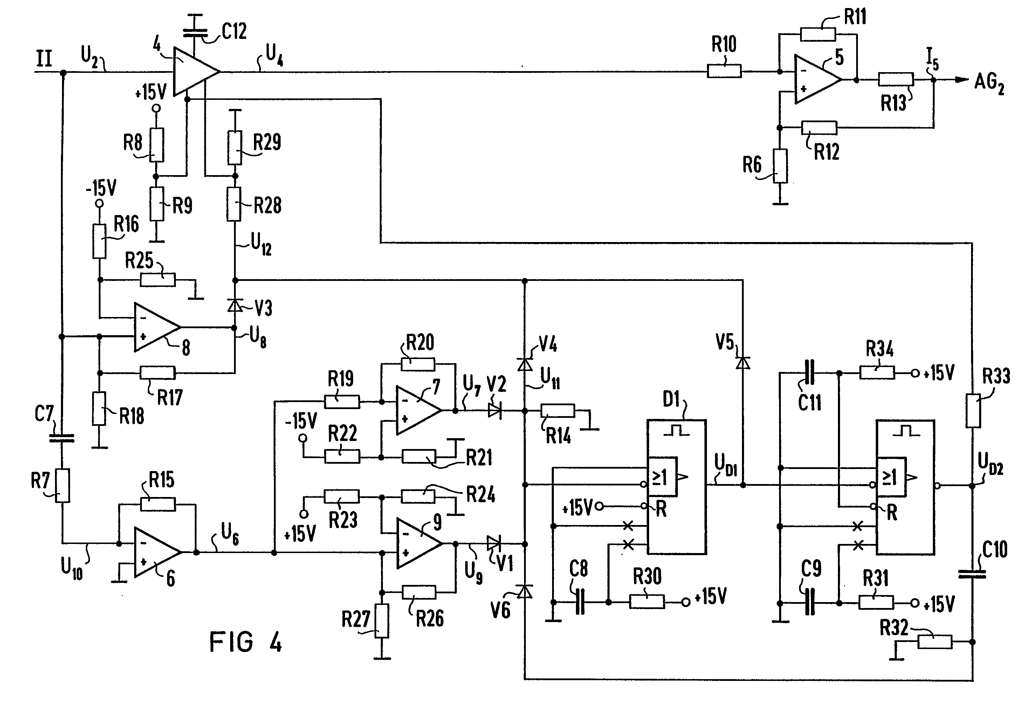

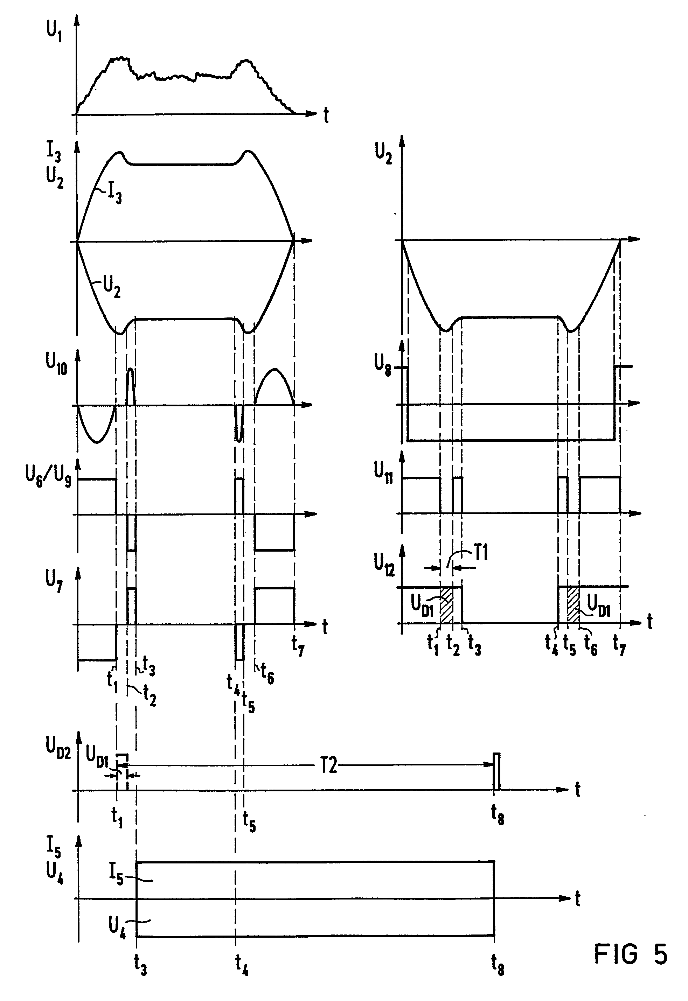

FIG 4 zeigt eine bevorzugte weitere Ausführungsform der Auswerteschaltung AWE. Diese ist besonders geeignet für die während eines Beschriftungsvorganges von einer bevorzugt in der Komponente K der FIG 3 angeordneten Fotodiode gelieferten Signale. Zum einen muß eine solche Auswerteschaltung auch bei einer kurzen Beschriftungszeit einen verläßlichen Leistungsmeßwert erzeugen. Zum anderen müssen die insbesondere aufgrund des schnellen Heraus-bzw. Hineinschwenkens der Fahne hervorgerufenen Übergangsvorgänge in der Fotodiodenspannung unterdrückt werden. Die Funktionsweise der Schaltung von FIG 4 wird anhand von den in der FIG 5 dargestellten Strom- und Spannungsverläufen desweiteren näher erläutert.

Dem mit dem Bezugzeichen II markierten Eingang der Schaltung kann die Spannung einer das Laserstreulicht erfaßenden Fotodiode direkt zugeführt werden. Da jedoch insbesondere bei der Verwendung nur einer einzigen Fotodiode deren Diodenspannung recht klein ist und zudem mit Rauschsignalen belastet sein kann, ist es vorteilhaft, die Diodenspannung zunächst zu verstärken und zu glätten. So wird bevorzugt die Spannung $U_2$ am Ausgang des Hauptverstärkers 2 der Schaltung von FIG 2 als Eingangssignal der Schaltung von FIG 4 zugeführt. In der FIG 5 ist das noch stark mit Rauschsignalen überlagerte Spannungssignal $U_1$ am Ausgang des Vorverstärkers 1 der Schaltung von FIG 2 dargestellt. Aufgrund der hohen Verstärkung des Hauptverstärkers 2 und dessen glättender Beschaltung ist das unterhalb von $U_1$ in der FIG 5 dargestellte negative Spannungssignal $U_2$ prinzipiell bereits als Leistungsmeßwertverlauf zur Anzeige geeignet. Der Vollständigkeit halber ist im gleichen Diagramm der FIG 5 noch das der Spannung $U_2$ entsprechende positive Stromsignal $I_3$ dargestellt, welches am Ausgang des in der Schaltung der FIG 2 zusätzlich enthaltenen Spannungs-Stromwandlers 3 auftritt.

Das Spannungssignal $U_2$ bildet den Verlauf der Strahlungsleistung während eines Beschriftungsvorganges genau ab. Dennoch würden aber die insbesondere zu Beginn und Ende eines jeden Beschriftungsvorganges ablaufenden Einschwingvorgänge der Fotodiodenspannung die Ablesbarkeit eines solchen Strahlungsleistungsmeßwertverlaufes erheblich erschweren. So hat die Auswertevorrichtung von FIG 4 die Aufgabe, die im Beispiel der FIG 5 insbesondere bis zum Zeitpunkt $t_3$ bzw. ab dem Zeitpunkt $t_4$ ablaufenden Änderungen der Fotodiodenspannung $U_2$ auszublenden. Das gewünschte Meßsignal soll somit nur die eingeschwungene und während des Verlaufes eines Beschriftungsvorganges zwischen den Zeitpunkten $t_3$ und $t_4$ konstante Laserstrahlungsleistung abbilden. Falls dieses "Leistungsplateau" aufgrund eines kurzen Beschriftungsvorganges nur kurzzeitig erreicht wird, soll die Auswerteschaltung den erfaßten Meßwert für einen solchen Zeitraum zwischenspeichern, wie er zum bequemen Ablesen des Meßwertes notwendig ist.

Hierzu wertet zunächst je ein erster bzw. zweiter Analog-Digital-Wandler das bevorzugt geglättete und verstärkte Eingangssignale $U_2$ aus. Dabei wird einem über einen Widerstand R15 zum invertierenden Eingang rückgekoppelten Operationsverstärker 6 die Änderung $U_{10}$ des Signales $U_2$ mittels einer Reihenschaltung aus einem Kondensator C7 und einem Widerstand R7 zugeführt. Dieser erste Analog-Digital-Wandler gibt somit das in der FIG 5 dargestellte erste binäre Signal $U_6$ dann ab, wenn der Verlauf der durch die Spannung $U_2$ repräsentierten Fotodiodenspannung eine über die Bauelemente C7, R7 ausgewählte Änderungsgeschwindigkeit überschreitet. Dem zweiten Analog-Digital-Wandler, der aus einem am invertierenden bzw. nichtinvertierenden Eingang mit den Widerständen R16, R25 bzw. R17, R18 beschalteten Operationsverstärker 8 besteht, wird das Spannungssignal $U_2$ direkt zugeführt. Dieser gibt ein zweites binäres Signal $U_8$ dann ab, wenn die Fotodiodenspannung $U_2$ einen über den aus den Widerständen R16, R25 gebildeten Spannungsteiler ausgewählten unteren Grenzwert überschreitet. Dem ersten Analog-Digital-Wandler 6 sind zwei weitere Operationsverstärker nachgeschaltet, wobei der erste Verstärker 7 aufgrund der Beschaltung über die Widerstände R19, R20 invertierend und der zweite Verstärker 9 aufgrund der Beschaltung über die Widerstände R26, R27 nichtinvertierend auf das Eingangssignal $U_6$ wirkt. Die Ausgangssignale $U_7$ bzw. $U_9$ dieser Verstärker werden bevorzugt über je eine Diode V2 bzw. V1, welche ein erstes ODER-Glied bilden, so zusammengefaßt, daß das Summensignal $U_{11}$ den "digitalen Betrag" des ersten binären Signales $U_6$ darstellt.

Ein wesentliches Element der Auswerteschaltung der FIG 4 ist ein Abtast-Halte-Glied 4, welches besonders vorteilhaft z.B. unter Verwendung eines integrierten Schaltkreises LF 398 aufgebaut werden kann. Zur Zwischenspeicherung eines Abtastwertes dient ein separater Speicherkondensator C12. Die Umschaltung zwischen den Zuständen "abtasten" und "halten" erfolgt über die Differenzspannung an zwei Steuereingängen, welche mit den Widerständen R8, R9 bzw. R28, R29 beschaltet sind. Mit Hilfe je eines weiteren ersten bzw. zweiten Impulsgebers D1 bzw. D2, und eines zweiten ODER-Gliedes werden diese Steuereingänge so beeinflußt, daß das Abtast-halte-Glied für die Dauer eines eingeschwungenen Leistungsmeßwertes in den Zustand "abtasten" geschaltet wird, d.h. im Beispiel der FIG 5 zwischen den Zeitpunkten $t_3$ und $t_4$. Beginnt der Meßwert insbesondere aufgrund des Einschwenkens der Fahne in den Strahlengang des Laserstrahlenbündels bei Beendigung eines Beschriftungsvorganges z.B. ab dem Zeitpunkt $t_4$ stark abzunehmen, so wird das Abtast-Halte-Glied in den Zustand "halten" geschaltet.

Hierzu wird der "binäre Betrag" $U_{11}$ am Ausgang des ersten ODER-Gliedes V1, V2 zunächst einem ersten Impulsgeber D1 zugeführt. Dieser wird bevorzugt durch die fallenden Flanken von $U_{11}$ in den Zeitpunkten $t_1$ bzw. $t_5$ angestoßen und erzeugt einen Impuls $U_{D1}$. Dessen Zeitdauer T1 wird über ein aus dem Kondensator C8 und dem Widerstand R30 gebildetes RC-Glied bestimmt.

Über ein insbesondere aus den weiteren Dioden V3, V4 und V5 bestehendes zweites ODER-Glied werden die Ausgangssignale $U_8$, $U_{11}$ und $U_{D1}$ so zusammengefaßt, daß die aufgrund der Extrema im Verlauf von $U_2$ zwischen den Zeitpunkten $t_2$, $t_3$ bzw. $t_5$, $t_6$ entstehenden kurzzeitigen Signalunterbrechungen von $U_{11}$ "ausgefüllt" werden. Das so entstehende Summensignal $U_{12}$ am Ausgang des zweiten ODER-Gliedes markiert somit den Bereich zwischen den Zeitpunkten $t_3$ und $t_4$, in dem die Laserleistung auf einen festen Wert eingeschwungen ist und der erfaßte Meßwert als gültig betrachtet werden kann. Somit ist das Signal $U_{12}$ zur Ansteuerung des Abtast-Halte-Gliedes über den mit den Widerständen R28, R29 beschalteten Steuereingang besonders geeignet. Der aktive Pegel des in der FIG 5 dargestellten Verlaufes von $U_{12}$ schaltet also das Abtast-Halte-Glied in den Zustand "halten", während bei Vorhandensein eines Nullpegels insbesondere zwischen den Zeitpunkten $t_3$ und $t_4$ das Element die in Form der Spannung $U_2$ anliegende aktuelle Strahlungsleistung "abtastet".

Bevorzugt wird die Länge des Impulses $U_{D1}$ am Ausgang des Impulsgebers D1 gerade so kurz eingestellt, daß die "Lücke" im Verlauf des digitalen Betrages $U_{11}$ in den Zeitabschnitten $t_1$ bis $t_2$ und $t_5$ bis $t_6$ gerade "gefüllt" wird. In einer anderen Ausführungsform kann die Dauer T1 des Impulses gerade so eingestellt sein, daß dessen fallende Flanke erst nach der fallenden Flanke des digitalen Betrages $U_{11}$ im Zeitpunkt $t_3$ erfolgt. Mit Hilfe einer solchen Einstellung wird erreicht, daß der Impuls $U_{D1}$ im Zeitpunkt $t_3$ gerade noch nicht abgelaufen ist, der Impulsgeber D1 nicht nocheinmal angestoßen und der Übergang von den Betriebszuständen "halten" auf "tasten" somit nicht geringfügig um T1 verschoben wird.

Es ist besonders vorteilhaft, wenn das Signal am Ausgang des ersten Impulsgebers D1 einen zweiten, nachgeschalteten Impuls geber D2 anstößt, der nach Ablauf einer bevorzugt über den Kondensator C9 und den Widerstand R31 einstellbaren Verzugszeit T2 einen kurzen Impuls $U_{D2}$ abgibt. Dieser Impuls ist über den Widerstand R33 an den mit den Widerständen R8, R9 beschalteten anderen Steuereingang des Abtast-Halte-Gliedes 4 gelegt, und bewirkt dessen Rücksetzung über die Entladung des Speicherkondensators C12. Die Verzugszeit T2 wird dabei bevorzugt so gewählt, daß ein Rücksetzen eines gespeicherten Leistungsmeßwertes erst dann folgt, nachdem über einen längeren Zeitraum hinweg kein aktueller Leistungsmeßwert mehr abgetastet wurde. Wie in der FIG 5 im Verlauf der Spannung $U_{D2}$ dargestellt, wird im Zeitpunkt $t_1$ aufgrund eines Impulses $U_{D1}$ der zweite Impulsgeber D2 angestoßen. Der ab dem Zeitpunkt $t_3$ abgetastete Leistungsmeßwert $U_4$ wird ab dem Zeitpunkt $t_4$ solange konstant gehalten, bis entweder im Zeitpunkt $t_8$ die Zeit T2 abgelaufen ist und ein Rücksetzimpuls durch den zweiten Impulsgeber generiert wird, bzw. bis zwischenzeitlich aufgrund eines erneuten Schreibvorganges des Lasers erneut auf die Betriebsart "abtasten" umgeschaltet worden ist. Ist nun der Eingang des zweiten Impulsgebers D2 nachtriggerbar, so wird bei jedem Impuls $U_{D1}$, in der FIG 5 also in den Zeitpunkten $t_1$ und $t_5$, die Zeit T2 erneut angestoßen und läuft erst nach der vollständigen Beendigung eines kompletten Beschriftungszyklusses ab. Ist dieser Eingang dagegen nicht nachtriggerbar, so wird das Abtast-Halte-Glied zwar zyklisch alle T2 rückgesetzt. Dies wirkt sich aber bei Andauern eines Beschriftungsvorganges kaum aus, da ständig zwischen Abtasten und Halten umgeschaltet wird und somit aktualisierte Leistungsmeßwerte erfaßt werden können.

Wie bereits am Beispiel der Schaltung von FIG 2 ausgeführt worden ist, ist es auch hier vorteilhaft, wenn der Leistungsmeßwert $U_4$ am Ausgang des Abtast-Halte-Gliedes 4 insbesondere zur Anzeige an einem Drehspulmeßinstrument $AG_2$ in ein Stromsignal $I_5$ umgesetzt wird. Hierzu dient ein zusätzlicher Spannungs-Stromwandler in der Schaltung von FIG 4, der aus einem mit den Widerständen R6, R10, R11, R12 und R13 in bekannter Weise beschalteten Operationsverstärker 5 besteht.

## Ansprüche

1. Verfahren zur Messung der Strahlungsleistung eines Laserstrahlenbündels im Dauerstrichbetrieb, **dadurch gekennzeichnet,** daß das vom Laserstrahlenbündel unvermeidlich hervorgerufene Laserstreulicht beim Auftreffen auf bzw. Durchtritt durch Komponenten ausgewertet wird, welche im Laserresonator bevorzugt auf der optischen Schiene angebracht sind.

2. Verfahren nach Anspruch 1 mit einem Laserstrahlenbündel, welches zur Beschriftung von insbesondere aus Metallen, Kunststoffen bzw. Kartonagen bestehenden Teilen verwendet wird, **dadurch gekennzeichnet,** daß das im Inneren einer Komponente zur schnellen Freigabe bzw. Abschattung des Laserstrahles für die Beschriftung auftretende Laserstreulicht ausgewertet wird.

3. Vorrichtung zur Durchführung des Verfahrens nach Anspruch 1, mit mindestens einer Fotodiode (H1) zur Laserstreulichtmessung, **dadurch gekennzeichnet,** daß die Fotodiode außerhalb des eigentlichen Laserstrahlenbündels (L) an bzw. in Komponenten (MB,K,AM,...) angebracht ist, welche im Laserresonator bevorzugt auf der optischen Schiene angebracht sind, und die Fotodiodenspannung (U_P) insbesondere zur Signalverstärkung und Glättung einer Auswerteschaltung (AWE) zugeführt wird (FIG 1).

4. Vorrichtung nach Anspruch 3, **dadurch gekennzeichnet,** daß die Fotodiode (H1) mit der lichtempfindlichen Seite auf das Laserstrahlenbündel (L) ausgerichtet ist.

5. Vorrichtung nach Anspruch 3 oder 4 mit einer Auswerteschaltung (AWE), **gekennzeichnet** durch

a) einen Vorverstärker (1,R1) für die Fotodiodenspannung (U_P), und

b) einen Hauptverstärker (2) für das Ausgangssignal (U_1) des Vorverstärkers, welcher insbesondere über Mittel zur Glättung (C6), Ausgangssignalbegrenzung (V9,V10), Nullpunkts- (R4,R5,R41) und Verstärkungseinstellung (R40) verfügt (FIG 2).

6. Vorrichtung nach Anspruch 5, **gekennzeichnet** durch einen ersten Spannungs-Stromwandler (R35,R37,3,R38,R39,R36), welcher das Ausgangssignal (U_2) des Hauptverstärkers (2) insbesondere zur Anzeige an einem Drehspulmeßinstrument (AG_1) in ein Stromsignal (I_3) umwandelt (FIG 2).

7. Vorrichtung nach Anspruch 5 oder 6, mit einem Laserstrahlenbündel (L), welches zur Beschriftung von insbesondere aus Metallen, Kunststoffen bzw. Kartonagen bestehenden Teilen verwendet wird, **dadurch gekennzeichnet,** daß die Fotodiode (H1) das im Inneren einer Komponente (K) zur schnellen Freigabe bzw. Abschattung des Laserstrahles für die Beschriftung auftretende Laserstreulicht erfaßt (FIG 1).

8. Vorrichtung nach Anspruch 7 mit einer Komponente (K) zur schnellen Freigabe bzw. Abschattung des Laserstrahles (L) für die Beschriftung, **gekennzeichnet** durch

a) eine bevorzugt metallische Fahne ("rotation shutter") (F), welche im Inneren eines bevorzugt zylindrischen Hohlraumes drehbar gelagert (D) und zur Freigabe bzw. Abschattung des über Öffnungen (DU) durch die Komponente hindurchtretenden Laserstrahlenbündels (L) aus dem Strahlengang heraus- bzw. in diesen hineinschwenkbar ist, und

b) eine den Hohlraum von außen zugänglich machende Bohrung (S2), in welche mindestens eine Fotodiode (H1) eingelegt ist (FIG 3).

9. Vorrichtung nach Anspruch 7 oder 8, **dadurch gekennzeichnet,** daß die Auswerteschaltung (AWE) enthält,

a) einen ersten Analog-Digital-Wandler (C7,R7,6,R15), welcher ein erstes binäres Signal (U_6) abgibt, solange die Spannung (U_2) am Eingang, welche der bevorzugt über einen Vorverstärker (1) und einem Hauptverstärker geführten Fotodiodenspannung (U_P) entspricht, eine ausgewählte Änderungsgeschwindigkeit (C7,R7,U_10) überschreitet,

b) einen zweiten Analog-Digital-Wandler (R16,R25,8,R17,R18), welcher ein zweites binäres Signal (U_8) abgibt, solange die Spannung (U_2) am Eingang, welche der bevorzugt über einen Vorverstärker (1) und einen Hauptverstärker geführten Fotodiodenspannung (U_P) entspricht, einen ausgewählten unteren Grenzwert (R16,R25) überschreitet,

c) eine Vorrichtung zur Bildung des digitalen Betrages (U_11) des ersten binären Signales (U_6), welche aus einer Parallelschaltung von je einem invertierenden (R19,R20,7,R21,R22) und einem nichtinvertierenden Verstärker (R23,R24,9,R26,R27) besteht, deren Ausgangssignale (U_7,U_9) über ein erstes, bevorzugt aus je einer Diode (V2,V1) gebildetes ODER-Glied zusammengefaßt werden,

d) einen ersten Impulsgeber (D1), der vom Ausgangssignal (U_11) des ersten ODER-Gliedes angestoßen wird,

e) ein zweites ODER-Glied, welches bevorzugt über je eine Diode (V3,V4,V5) die Signale (U_8, U_11, U_D1) am Ausgang des zweiten Analog-Digital-Wandlers (8), des ersten ODER-Gliedes (V1,V2) und des ersten Impulsgebers (D1) zusammenfaßt,

f) einen zweiten Impulsgeber (D2), der vom Ausgangssignal (U_D1) des ersten Impulsgebers (D1) angestoßen wird, und

g) ein Abtast-Halte-Glied (4,C12,R8,R9,R28,R29), welches von den binären Zuständen des Signales (U_12) am Ausgang des zweiten ODER-Gliedes (V3,V4,V5) gesteuert und vom Ausgangssignal des zweiten Impulsgebers (D2) rückgesetzt wird (FIG 4 und 5).

10. Vorrichtung nach Anspruch 9, **gekennzeichnet** durch einen weiteren Spannungs-Stromwandler (R10,R11,5,R12,R13,R6), welcher das Ausgangssignal (U_4) des Abtast-Halte-Gliedes (4) insbesondere zur Anzeige an einem weiteren Drehspulmeßinstrument (AG_2) in ein Stromsignal (I_5) umwandelt (FIG 4).

FIG 1

EP 0 308 763 A2

87 P 3352

87 P 3352

FIG 2

87 P 3352

FIG 3

FIG 4

EP 0 308 763 A2

87 P 3352

87 P 3352

FIG 5